# EUROPEAN PATENT SPECIFICATION

(11) **EP 4 147 895 B1**
(45) Date of publication and mention of the grant of the patent: **20.11.2024**
(21) Application number: 22194437.4
(22) Date of filing: 07.09.2022
(51) Int. Cl.: B60K 1/00, B60G 11/27, B60K 17/36, B60K 23/08, B60G 17/019

(54) **DRIVE CONTROL DEVICE**
ANTRIEBSSTEUERUNGSVORRICHTUNG
DISPOSITIF DE COMMANDE D'ENTRAÎNEMENT

(30) Priority: 10.09.2021 JP 2021147494
(43) Date of publication of application: 15.03.2023
(73) Proprietor: HINO MOTORS, LTD., Hino-shi, Tokyo 191-8660 (JP); TOYOTA JIDOSHA KABUSHIKI KAISHA, Aichi-Ken 471-8571 (JP)
(72) Inventor: OTSUKA, Yuki, Tokyo, 191-8660 (JP)
(74) Representative: D Young & Co LLP

(56) References cited:
- WO-A1-2019/025183
- WO-A1-2020/186443
- JP-A- 2000 006 633
- JP-A- 2004 345 446
- US-A1- 2008 183 353
- US-A1- 2008 269 986
- US-B1- 9 272 599

## Description

### TECHNICAL FIELD

An aspect of the present invention relates to a drive control device for a multi-axle-driving electrified vehicle including a plurality of driving axles.

### BACKGROUND

A vehicle with an air suspension described in Patent Document 1 includes a rear-front axle and a rear-rear axle to which power is transmitted via an inter-axle differential. In a vehicle with an air suspension, startability and traveling performance are improved by decreasing an axle load of the rear-rear axle and locking the inter-axle differential when the vehicle wheels of the rear-rear axle slip on a ramp, a rugged road, or the like.

### PATENT DOCUMENT

[Patent Document 1] Japanese Unexamined Patent Publication No. 2000-006633
WO 2019/025183 A1 discloses an adjusting device for an electrically operated utility vehicle and method for the operation thereof WO 2019/025183 A1 does not disclose a drive control unit configured to control operations of a first electric motor and a second electric motor, wherein the drive control unit is configured to perform driving force change control for changing driving forces of the first electric motor and the second electric motor when an axle load distribution change control unit performs axle load distribution change control.
US 9272599 B1 discloses a controllable load distribution system for a vehicle.
US 2008/269986 A1 discloses a system and method for controlling the axle load split ratio on a vehicle with two front axles.
JP 2004345446 A discloses a traveling control device for vehicle.
WO 2020/186443 A1 discloses torque vector distribution system for hub motor driving system.
US 2008183353 A1 discloses a vehicle systems control for improving stability.
JP 2000006633 A an air suspension vehicle emergency starting device.

### SUMMARY

Particular aspects of the invention are set out in the appended claims. In a multi-axle-driving electrified vehicle including a plurality of driving axles, the driving axles are independently driven. That is, in a multi-axle-driving electrified vehicle, an inter-axle differential as in the vehicle with an air suspension described in Patent Document 1 is not provided, and differentials of the driving axles are not locked. Accordingly, in a multi-axle-driving electrified vehicle, driving forces of the plurality of driving axles are not changed even when axle load distributions for the plurality of driving axles are changed.

For example, when axle loads distributed to a plurality of driving axles change, a ground-contact pressure of a wheel of the driving axle of which an axle load has increased increases, but a ground-contact pressure of a wheel of a driving axle of which an axle load has decreased decreases and idles at a higher rotation speed. As a result, energy loss increases excessively, whereby electric power consumption (fuel efficiency) deteriorates. In addition, there is a likelihood that splashing of water or the like will increase due to idling of a wheel.

Therefore, an aspect of the present invention provides a drive control device for a multi-axle-driving electrified vehicle that can control operations of a plurality of driving axles using driving forces based on an axle load distribution.

According to an aspect of the present invention, there is provided a drive control device for a multi-axle-driving electrified vehicle including a first driving axle that is rotationally driven by a first electric motor and a second driving axle that is rotationally driven by a second electric motor, the drive control device including: an axle load distribution change control unit configured to perform axle load distribution change control for changing an axle load distribution for the first driving axle and the second driving axle; and a drive control unit configured to control operations of the first electric motor and the second electric motor. The drive control unit is configured to perform driving force change control for changing driving forces of the first electric motor and the second electric motor when the axle load distribution change control unit performs the axle load distribution change control.

In the drive control device, by causing the axle load distribution change control unit to perform axle load distribution change control for changing an axle load distribution for the first driving axle and the second driving axle, it is possible to increase a ground-contact pressure of wheels of the driving axle of which an axle load has increased. Accordingly, it is possible to curb slippage of the multi-axle-driving electrified vehicle on an irregular ground surface. When the axle load distribution change control unit is performing axle load distribution change control, it is possible to control operations of a plurality of driving axles with driving forces based on the axle load distribution by causing the drive control unit to perform driving force change control for changing the driving forces of the first electric motor and the second electric motor.

The axle load distribution change control unit may be configured to change the axle load distribution for the first driving axle and the second driving axle as the axle load distribution change control such that an axle load of the second driving axle becomes less than that of the first driving axle, and the drive control unit may be configured to set the driving force of the second electric motor to be less than the driving force of the first electric motor as the driving force change control.

In the drive control device, by causing the axle load distribution change control unit to change the axle load distribution for the first driving axle and the second driving axle such that the axle load of the second driving axle becomes less than that of the first driving axle as the axle load distribution change control, it is possible to increase a ground-contact pressure of the wheels of the first driving axle. On the other hand, when the axle load distribution change control unit performs axle load distribution change control, a ground-contact pressure of the wheels of the second driving axles decreases. However, by causing the drive control unit to set the driving force of the second electric motor to be less than the driving force of the first electric motor as driving force change control, it is possible to curb idling of the second driving axle. Accordingly, it is possible to decrease energy loss to curb deterioration in electric power consumption (fuel efficiency) and to curb splashing of water or the like due to idling of the wheels.

The drive control unit may be configured to set the driving force of the second electric motor to zero as the driving force change control. In the drive control device, by causing the drive control unit to set the driving force of the second electric motor to zero as the driving force change control, it is possible to prevent idling of the second driving axle.

The drive control unit may be configured to control torques of the first electric motor and the second electric motor as the driving forces of the first electric motor and the second electric motor. In the drive control device, by causing the drive control unit to control torques of the first electric motor and the second electric motor, it is possible to appropriately control operations of the first electric motor and the second electric motor.

The drive control unit may be configured to set a first required driving force which is calculated on the basis of an accelerator operation amount to a first command driving force for controlling an operation of the first electric motor and to set a second required driving force which is calculated on the basis of the accelerator operation amount to a second command driving force for controlling an operation of the second electric motor. The drive control unit may be configured to set a value less than the second required driving force as the second command driving force as the driving force change control. In the drive control device, by causing the drive control unit to control operations of the first electric motor and the second electric motor using the first required driving force and the second required driving force calculated on the basis of an accelerator operation amount as the first command driving force and the second command driving force and to set a value less than the second required driving force as the second command driving force as the driving force change control, it is possible to curb idling of the second driving axle.

The drive control unit may be configured to set a value greater than the first required driving force as the first command driving force as the driving force change control. In the drive control device, by causing the drive control unit to set a value greater than the first required driving force as the first command driving force as the driving force change control, it is possible to curb a decrease in driving force of the multi-axle-driving electrified vehicle as a whole.

The drive control device may further include a first inverter connected to the first electric motor and a second inverter connected to the second electric motor, and the drive control unit may be configured to control the operation of the first electric motor by outputting the first command driving force to the first inverter and to control the operation of the second electric motor by outputting the second command driving force to the second inverter. In the drive control device, by causing the drive control unit to output the first command driving force and the second command driving force to the first inverter and the second inverter, it is possible to appropriately control operations of the first electric motor and the second electric motor and to appropriately change the driving forces of the first electric motor and the second electric motor when the axle load distribution change control unit changes the axle load distribution.

The multi-axle-driving electrified vehicle may include a front axle, a rear-front axle that is disposed on a rear side with respect to the front axle in a vehicle length direction, and a rear-rear axle that is disposed on a rear side with respect to the rear-front axle in the vehicle length direction. The first driving axle may be the rear-front axle, and the second driving axle may be the rear-rear axle. In the drive control device, by causing the axle load distribution change control unit to change the axle load distribution for the rear-front axle and the rear-rear axle, it is possible to appropriately curb slippage of the multi-axle-driving electrified vehicle on an irregular ground surface. By causing the drive control unit to change the driving forces of the first electric motor rotationally driving the rear-front axle and the second electric motor rotationally driving the rear-rear axle, it is possible to appropriately curb idling of the rear-rear axle when the axle load distribution change control unit changes the axle load distribution.

The drive control unit may be configured to slowly return the driving forces of the first electric motor and the second electric motor which have been changed through the driving force change control to an original state when the axle load distribution change control unit ends the axle load distribution change control. In the drive control device, when the axle load distribution change control unit ends the axle load distribution change control, it is possible to curb a sudden change in behavior of the multi-axle-driving electrified vehicle by causing the drive control unit to gradually return the driving forces of the first electric motor and the second electric motor changed through the driving force change control to the original state.

The drive control device may further include a first air suspension connected to the first driving axle and a vehicle body of the multi-axle-driving electrified vehicle and a second air suspension connected to the second driving axle and the vehicle body, and the axle load distribution change control unit may be configured to change the axle load distribution for the first driving axle and the second driving axle by changing amounts of supplied/discharged air of the first air suspension and the second air suspension as the axle load distribution change control. In the drive control device, by causing the axle load distribution change control unit to change the amounts of supplied/discharged air of the first air suspension and the second air suspension, it is possible to easily change the axle load distribution for the first driving axle and the second driving axle.

According to the aspect of the present invention, it is possible to control operations of a plurality of driving axles using driving forces based on an axle load distribution.

### BRIEF DESCRIPTION OF THE DRAWINGS

FIG. 1 is a side view schematically illustrating a multi-axle-driving electrified vehicle in which a drive control device according to an embodiment is mounted.
FIG. 2 is a plan view schematically illustrating a part of the multi-axle-driving electrified vehicle illustrated in FIG. 1.
FIG. 3 is a block diagram illustrating a configuration of the drive control device according to the embodiment.
FIG. 4 is a flowchart illustrating an example of a processing routine performed by the drive control device according to the embodiment.

### DETAILED DESCRIPTION

Hereinafter, an embodiment of the present invention will be described in detail with reference to the accompanying drawings. The same or corresponding elements in the following description will be referred to by the same reference signs, and description thereof will be repeated.

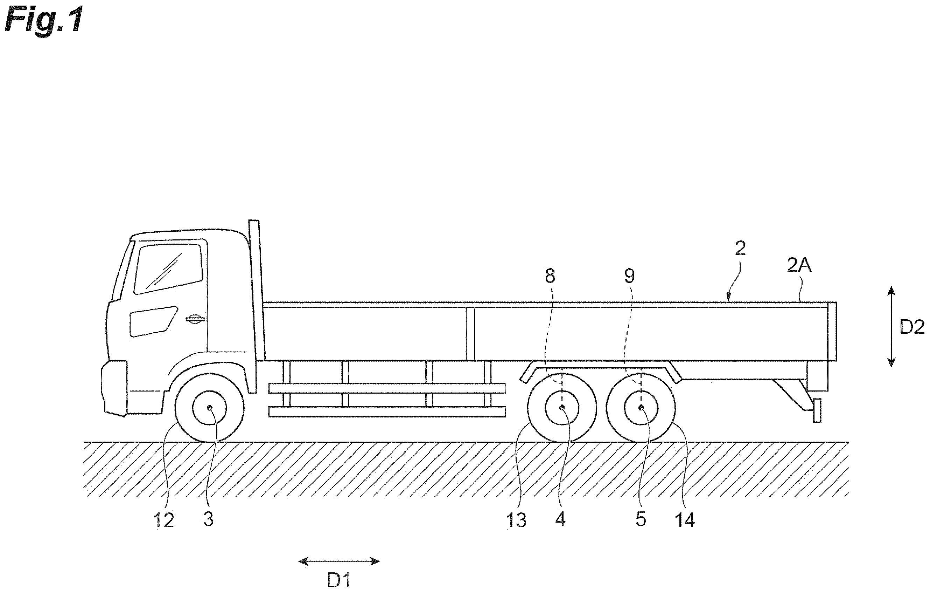

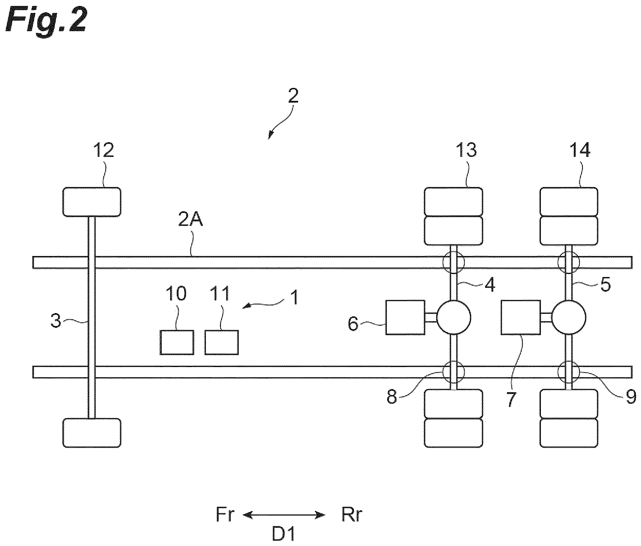

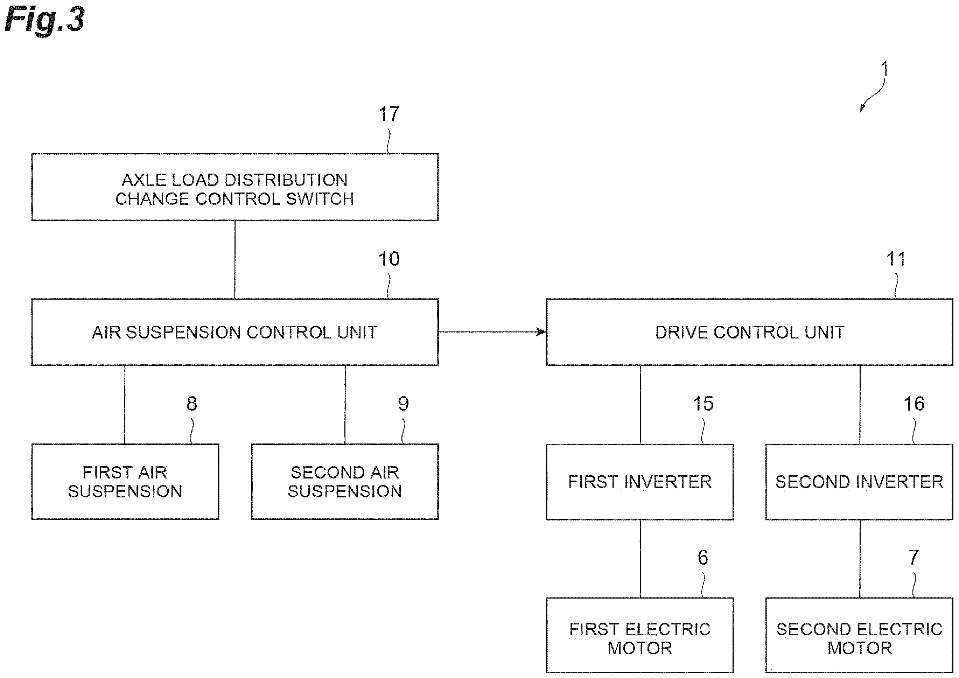

FIG. 1 is a side view schematically illustrating a multi-axle-driving electrified vehicle in which a drive control device according to an embodiment is mounted. FIG. 2 is a plan view schematically illustrating a part of the multi-axle-driving electrified vehicle illustrated in FIG. 1. FIG. 3 is a block diagram illustrating a configuration of the drive control device according to the embodiment. As illustrated in FIGS. 1 to 3, the drive control device 1 according to the embodiment is mounted in a multi-axle-driving electrified vehicle 2 and controls driving of the multi-axle-driving electrified vehicle 2. The multi-axle-driving electrified vehicle 2 is an electrified vehicle including a plurality of driving axles. An electrified vehicle is a vehicle that can travel by operating an electric motor such as a motor using electrical energy. The electrified vehicle may travel using a drive source such as an engine other than an electric motor. Examples of the electrified vehicle include a hybrid electric vehicle (HEV), a plug-in hybrid electric vehicle (PHEV), a fuel cell electric vehicle (FCEV), and a battery electric vehicle (BEV).

The multi-axle-driving electrified vehicle 2 includes a front axle 3, a rear-front axle 4, a rear-rear axle 5, a first electric motor 6, a second electric motor 7, a first air suspension 8, a second air suspension 9, an air suspension control unit 10, a drive control unit 11.

The front axle 3 is a driven axle that is disposed in a part on a front side Fr in a vehicle length direction D1 of the multi-axle-driving electrified vehicle 2. Front wheels 12 are connected to the front axle 3. The front axle 3 also serves as a steering shaft used to steer the multi-axle-driving electrified vehicle 2.

The rear-front axle 4 is a driving axle (a first driving axle) that is disposed in a part on a rear side Rr in the vehicle length direction D1 of the multi-axle-driving electrified vehicle 2. The rear-front axle 4 is disposed on the rear side Rr of the front axle 3 in the vehicle length direction D1. Rear-front wheels 13 are connected to the rear-front axle 4.

The rear-rear axle 5 is a driving axle (a second driving axle) that is disposed in a part on the rear side Rr in the vehicle length direction D1 of the multi-axle-driving electrified vehicle 2. The rear-rear axle 5 is disposed on the rear side Rr of the rear-front axle 4 in the vehicle length direction D1. Rear-rear wheels 14 are connected to the rear-rear axle 5.

The first electric motor 6 is a rotary electric motor such as a motor. The first electric motor 6 is connected to the rear-front axle 4 and rotationally drives the rear-front axle 4. A first inverter 15 is connected to the first electric motor 6. The first inverter 15 generates a control signal for rotationally driving the first electric motor 6 on the basis of a command signal from the drive control unit 11.

The second electric motor 7 is a rotary electric motor such as a motor. The second electric motor 7 is connected to the rear-rear axle 5 and rotationally drives the rear-rear axle 5. A second inverter 16 is connected to the second electric motor 7. The second inverter 16 generates a control signal for rotationally driving the second electric motor 7 on the basis of a command signal from the drive control unit 11.

The first air suspension 8 is connected to the rear-front axle 4 and a vehicle body 2A of the multi-axle-driving electrified vehicle 2. The first air suspension 8 supports the vehicle body 2A with respect to the rear-front axle 4 using an air pressure and absorbs a shock from a ground surface input from the rear-front axle 4 to the vehicle body 2A. The first air suspension 8 can adjust the height of the vehicle body 2A from the rear-front axle 4 by supplying/discharging (supply and discharging) air. The first air suspension 8 includes, for example, a first air pack (not illustrated) and a first air supply and discharge device (not illustrated) that supplies and discharges air to and from the first air pack. The first air supply and discharge device supplies and discharges air with respect to the first air pack on the basis of a command signal from the air suspension control unit 10. The first air supply and discharge device is, for example, an air pump.

The second air suspension 9 is connected to the rear-rear axle 5 and the vehicle body 2A of the multi-axle-driving electrified vehicle 2. The second air suspension 9 supports the vehicle body 2A with respect to the rear-rear axle 5 using an air pressure and absorbs a shock from a ground surface input from the rear-rear axle 5 to the vehicle body 2A. The second air suspension 9 can adjust the height of the vehicle body 2A from the rear-rear axle 5 by supplying/discharging (supply and discharging) air. The second air suspension 9 includes, for example, a second air pack (not illustrated) and a second air supply and discharge device (not illustrated) that supplies and discharges air to and from the second air pack. The second air supply and discharge device supplies and discharges (supply and discharging) air with respect to the second air pack on the basis of a command signal from the air suspension control unit 10. The second air supply and discharge device is, for example, an air pump.

The air suspension control unit 10 is an electronic control unit (ECU) including a CPU, a ROM, and a RAM. The air suspension control unit 10 performs various types of control by loading a program stored in the ROM to the RAM and causing the CPU to execute the program. The air suspension control unit 10 may include a single electronic control unit or may include a plurality of electronic control units. The air suspension control unit 10 may be an electronic control unit which is shared by another control unit.

The air suspension control unit 10 controls operations of the first air suspension 8 and the second air suspension 9. The air suspension control unit 10 performs axle load distribution change control for changing an axle load distribution for the rear-front axle 4 and the rear-rear axle 5. Accordingly, the air suspension control unit 10 also serves as an axle load distribution change control unit that performs axle load distribution change control. The axle load distribution change control is, for example, control for curbing slippage of the multi-axle-driving electrified vehicle 2 on an irregular ground surface. That is, when the axle load distribution for the rear-front axle 4 and the rear-rear axle 5 is changed through the axle load distribution change control, a ground-contact pressure of wheels of the driving axle of which the axle load has increased increases and thus slippage of the multi-axle-driving electrified vehicle 2 on an irregular ground surface is curbed. In this embodiment, the air suspension control unit 10 performs the axle load distribution change control such as the axle load of the rear-rear axle 5 becomes less than that of the rear-front axle 4. The axle load distribution change control is started, for example, when an axle load distribution change control switch 17 provided in the multi-axle-driving electrified vehicle 2 is operated, and is ended when the operation of the axle load distribution change control switch 17 is cancelled.

The air suspension control unit 10 performs the axle load distribution change control, for example, by controlling the operations of the first air suspension 8 and the second air suspension 9. When amounts of supplied/discharged air in the first air suspension 8 and the second air suspension 9 change, lengths in a vehicle height direction D2 of the first air pack and the second air pack change and the axle load distribution for the rear-front axle 4 and the rear-rear axle 5 changes. Accordingly, the air suspension control unit 10 performs the axle load distribution change control by changing the amounts of supplied/discharged air in the first air suspension 8 and the second air suspension 9. In this embodiment, the air suspension control unit 10 decreases the axle load of the rear-rear axle 5 in comparison with that of the rear-front axle 4 by discharging air from the second air suspension 9 as the axle load distribution change control. The air suspension control unit 10 may decrease the axle load of the rear-rear axle 5 in comparison with that of the rear-front axle 4 by supplying air to the first air suspension 8 as the axle load distribution change control. The air suspension control unit 10 may decrease the axle load of the rear-rear axle 5 in comparison with that of the rear-front axle 4 by discharging air from the second air suspension 9 and supplying air to the first air suspension 8.

The drive control unit 11 is an electronic control unit (ECU) including a CPU, a ROM, and a RAM. The drive control unit 11 performs various types of control by loading a program stored in the ROM to the RAM and causing the CPU to execute the program. The drive control unit 11 may include a single electronic control unit or may include a plurality of electronic control units. The drive control unit 11 may be an electronic control unit which is shared by another control unit.

The drive control unit 11 controls operations of the rear-front axle 4 and the rear-rear axle 5. The drive control unit 11 performs driving force change control for changing the driving forces of the first electric motor 6 and the second electric motor 7 when the air suspension control unit 10 is performing the axle load distribution change control. In this embodiment, the driving force of the second electric motor 7 is decreased in comparison with the driving force of the first electric motor 6 as the driving force change control. The drive control unit 11 may set the driving force of the second electric motor 7 to zero as the driving force change control. When the air suspension control unit 10 has ended the axle load distribution change control, the drive control unit 11 may quickly return the driving forces of the first electric motor 6 and the second electric motor 7 which have been changed through the driving force change control to the original states, but preferably slowly returns the driving forces of the first electric motor 6 and the second electric motor 7 which have been changed through the driving force change control to the original states. In this case, for example, the driving forces of the first electric motor 6 and the second electric motor 7 may be gradually returned to the original state at a predetermined rate or the driving forces of the first electric motor 6 and the second electric motor 7 may be gradually returned to the original state at a variable rate.

The driving forces of the first electric motor 6 and the second electric motor 7 can be expressed by torques of the first electric motor 6 and the second electric motor 7 or rotation speeds of the first electric motor 6 and the second electric motor 7. In this embodiment, the drive control unit 11 controls the torques of the first electric motor 6 and the second electric motor 7 as the driving forces of the first electric motor 6 and the second electric motor 7.

The drive control unit 11 controls the operations of the first electric motor 6 and the second electric motor 7, for example, by outputting a first command torque (a first command driving force) for controlling the operation of the first electric motor 6 to the first inverter 15 and outputting a second command torque (a second command driving force) for controlling the operation of the second electric motor 7 to the second inverter 16. More specifically, the drive control unit 11 calculates a first required torque (a first required driving force) corresponding to the first electric motor 6 and a second required torque (a second required driving force) corresponding to the second electric motor 7 on the basis of an accelerator operation amount of the multi-axle-driving electrified vehicle 2. The drive control unit 11 calculates a total required torque of the multi-axle-driving electrified vehicle 2, for example, on the basis of the accelerator operation amount of the multi-axle-driving electrified vehicle 2 and sets a half value of the total required torque of the multi-axle-driving electrified vehicle 2 as the first required torque and the second required torque. The calculation of the total required torque of the multi-axle-driving electrified vehicle 2 based on the accelerator operation amount of the multi-axle-driving electrified vehicle 2 can be performed using various known methods. The first required torque and the second required torque may be calculated on the basis of other information such as a rotation speed of the first electric motor 6 and a rotation speed of the second electric motor 7 in addition to the accelerator operation amount of the multi-axle-driving electrified vehicle 2.

When the air suspension control unit 10 is not performing the axle load distribution change control, the drive control unit 11 outputs the calculated first required torque as the first command torque to the first inverter 15 and outputs the calculated second required torque as the second command torque to the second inverter 16. Accordingly, since a control signal based on the first command torque is output from the first inverter 15 to the first electric motor 6, the first electric motor 6 is rotationally driven such that the first command torque is achieved. Since a control signal based on the second command torque is output from the second inverter 16 to the second electric motor 7, the second electric motor 7 is rotationally driven such that the second command torque is achieved.

On the other hand, when the air suspension control unit 10 is performing the axle load distribution change control, the drive control unit 11 outputs the first required torque calculated as the driving force change control as the first command torque to the first inverter 15 and outputs a value less than the calculated second required torque as the second command torque to the second inverter 16. For example, the drive control unit 11 may set a value less than the calculated second required torque as a second limit required torque and output the second limit required torque as the second command torque to the second inverter 16. The drive control unit 11 may set the second command torque to zero as the driving force change control. When the air suspension control unit 10 ends the axle load distribution change control, the drive control unit 11 gradually returns the second command torque output to the second inverter 16 to the second required torque while gradually increasing the second command torque.

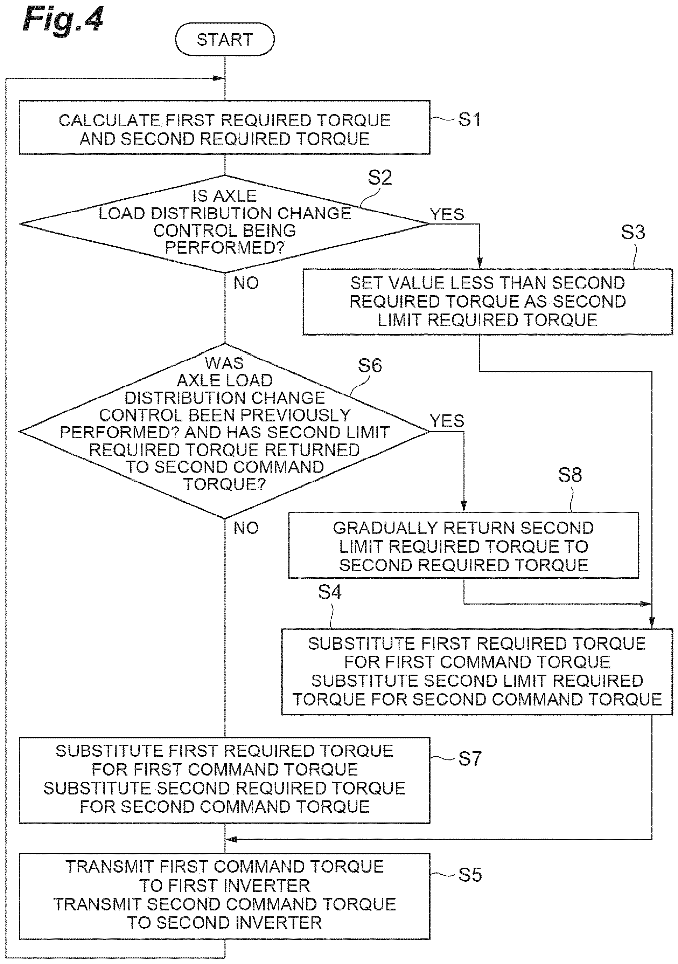

An example of a routine of processing operations performed by the drive control device 1 according to the embodiment will be described below. FIG. 4 is a flowchart illustrating an example of a routine of processing operations performed by the drive control device according to the embodiment. For example, the routine of processing operations illustrated in FIG. 4 is started when a system of the multi-axle-driving electrified vehicle 2 starts with turning on of a key, and is ended when the system of the multi-axle-driving electrified vehicle 2 ends with turning off of the key.

As illustrated in FIG. 4, first, the drive control device 1 calculates the first required torque corresponding to the first electric motor 6 and the second required torque of the second electric motor 7 on the basis of the accelerator operation amount of the multi-axle-driving electrified vehicle 2, the rotation speed of the first electric motor 6, the rotation speed of the second electric motor 7, and the like (Step S1). Then, the drive control device 1 determines whether the air suspension control unit 10 is performing axle load distribution change control (Step S2).

When it is determined that the air suspension control unit 10 is performing axle load distribution change control (Step S2: YES), the drive control device 1 sets a value less than the second required torque calculated in Step S1 as the second limit required torque as driving force change control (Step S3). The second limit required torque is, for example, zero. Then, the drive control device 1 substitutes the first required torque calculated in Step S1 into the first command torque and substitutes the second limit required torque into the second command torque (Step S4). Then, the drive control device 1 transmits the first command torque to the first inverter 15 and transmits the second command torque to the second inverter 16 (Step S5). As a result, the first electric motor 6 is rotationally driven such that the first required torque is achieved, and the second electric motor 7 is rotationally driven such that the second limit required torque is achieved. Then, the drive control device 1 causes the routine to return to Step S1 and repeatedly performs the routine.

When it is determined in Step S2 that the air suspension control unit 10 is not performing axle load distribution change control (Step S2: NO), the drive control device 1 determines whether the air suspension control unit 10 previously performed the axle load distribution change control and the second limit required torque has not returned to the second required torque (Step S6). When it is determined that the air suspension control unit 10 previously performed the axle load distribution change control and the second limit required torque has not returned to the second required torque (Step S6: YES), the drive control device 1 gradually returns the second limit required torque to the second required torque calculated in Step S1. Then, the drive control device 1 substitutes the first required torque calculated in Step S1 into the first command torque and substitutes the second limit required torque into the second command torque (Step S4). Then, the drive control device 1 transmits the first command torque to the first inverter 15 and transmits the second command torque to the second inverter 16 (Step S5). Accordingly, the first electric motor 6 is rotationally driven such that the first required torque is achieved, and the second electric motor 7 is rotationally driven such that the second limit required torque gradually returning to the second required torque is achieved. Then, the drive control device 1 causes the routine to return to Step S1 and repeatedly performs the routine.

When it is determined in Step S6 that the air suspension control unit 10 did not previously perform the axle load distribution change control or the second limit required torque has returned to the second required torque (Step S6: NO), the drive control device 1 substitutes the first required torque calculated in Step S1 into the first command torque and substitutes the second required torque calculated in Step S1 into the second command torque (Step S7). Then, the drive control device 1 transmits the first command torque to the first inverter 15 and transmits the second command torque to the second inverter 16 (Step S5). Accordingly, the first electric motor 6 is rotationally driven such that the first required torque is achieved, and the second electric motor 7 is rotationally driven such that the second required torque is achieved. Then, the drive control device 1 causes the routine to return to Step S1 and repeatedly performs the routine.

As described above, in the drive control device 1 according to the embodiment, a ground-contact pressure of the wheels of the driving axle of which the axle load has increased can be increased by causing the air suspension control unit 10 to perform axle load distribution change control for changing the axle load distribution for the rear-front axle 4 and the rear-rear axle 5. Accordingly, it is possible to curb slippage of the multi-axle-driving electrified vehicle 2 on an irregular ground surface. When the air suspension control unit 10 is performing the axle load distribution change control, the drive control unit 11 performs driving force change control for changing the driving forces of the first electric motor 6 and the second electric motor 7 and thus can control operations of a plurality of driving axles using the driving forces based on the axle load distribution.

In the drive control device 1, a ground-contact pressure of the rear-front wheels 13 can be increased by causing the air suspension control unit 10 to change the axle load distribution for the rear-front axle 4 and the rear-rear axle 5 such that the axle load of the rear-rear axle 5 becomes less than the rear-front axle 4 as the axle load distribution change control. On the other hand, when the air suspension control unit 10 performs the axle load distribution change control, the ground-contact pressure of the rear-rear wheels 14 is decreased. However, it is possible to curb idling of the rear-rear axle 5 by causing the drive control unit 11 to set the driving force of the second electric motor 7 to be less than the driving force of the first electric motor 6 as the driving force change control. Accordingly, it is possible to decrease an energy loss to curb electric power consumption (fuel efficiency) and to curb splashing of water or the like due to idling of the rear-rear wheels 14.

In the drive control device 1, it is possible to prevent idling of the rear-rear axle 5 by causing the drive control unit 11 to set the driving force of the second electric motor 7 to zero as the driving force change control.

In the drive control device 1, it is possible to appropriately control the operations of the first electric motor 6 and the second electric motor 7 by causing the drive control unit 11 to control the torques of the first electric motor 6 and the second electric motor 7.

In the drive control device 1, the drive control unit 11 controls the operations of the first electric motor 6 and the second electric motor 7 using the first required torque (the first required driving force) and the second required torque (the second required driving force) calculated on the basis of the accelerator operation amount as the first command torque (the first command driving force) and the second command torque (the second command driving force), but it is possible to curb idling of the rear-rear axle 5 by setting a value less than the second required torque as the second command torque as the driving force change control.

In the drive control device 1, it is possible to curb a decrease of the total driving force of the multi-axle-driving electrified vehicle 2 by causing the drive control unit 11 to set a value greater than the first required torque as the first command torque as the driving force change control.

In the drive control device 1, by causing the drive control unit 11 to output the first command torque and the second command torque to the first inverter 15 and the second inverter 16, it is possible to appropriately control the operations of the first electric motor 6 and the second electric motor 7 and to appropriately change the driving forces of the first electric motor 6 and the second electric motor 7 when the air suspension control unit 10 changes the axle load distribution.

In the drive control device 1, it is possible to appropriately curb slippage of the multi-axle-driving electrified vehicle 2 on an irregular ground surface by causing the air suspension control unit 10 to change the axle load distribution for the rear-front axle 4 and the rear-rear axle 5. By causing the drive control unit 11 to change the driving forces of the first electric motor 6 rotationally driving the rear-front axle 4 and the second electric motor 7 rotationally driving the rear-rear axle 5, it is possible to appropriately curb idling of the rear-rear axle 5 when the air suspension control unit 10 changes the axle load distribution.

In the drive control device 1, when the air suspension control unit 10 has ended the axle load distribution change control, it is possible to curb a quick change in behavior of the multi-axle-driving electrified vehicle 2 by causing the drive control unit 11 to gradually return the driving forces of the first electric motor 6 and the second electric motor 7 which have been changed through the driving force change control to the original states.

In the drive control device 1, it is possible to easily change the axle load distribution for the rear-front axle 4 and the rear-rear axle 5 by causing the air suspension control unit 10 to change the amounts of supplied/discharged air with respect to the first air suspension 8 and the second air suspension 9.

While an embodiment of the present invention has been described above, the present invention is not limited to the embodiment and may be applied to modifications or the like without departing from the scope of the appended claims.

For example, in the aforementioned embodiment, the multi-axle-driving electrified vehicle includes one driven axle and two driving axles, but the number of driven axles and the number of driving axles are not particularly limited as long as it includes two or more driving axles.

### REFERENCE SIGNS LIST

1 Drive control device
2 Multi-axle-driving electrified vehicle
2A Vehicle body
3 Front axle
4 Rear-front axle
5 Rear-rear axle
6 First electric motor
7 Second electric motor
8 First air suspension
9 Second air suspension
10 Air suspension control unit (axle load distribution change control unit)
11 Drive control unit
12 Front wheel
13 Rear-front wheel
14 Rear-rear wheel
15 First inverter
16 Second inverter
17 Axle load distribution change control switch
D1 Vehicle length direction
D2 Vehicle height direction

## Claims

1. A drive control device (1) for a multi-axle-driving electrified vehicle (2) including a first driving axle (4) that is rotationally driven by a first electric motor (6) and a second driving axle (5) that is rotationally driven by a second electric motor (7), the drive control device comprising:
an axle load distribution change control unit (10) configured to perform axle load distribution change control for changing an axle load distribution for the first driving axle and the second driving axle; and
a drive control unit (11) configured to control operations of the first electric motor and the second electric motor,
wherein the drive control unit is configured to perform driving force change control for changing driving forces of the first electric motor and the second electric motor when the axle load distribution change control unit performs the axle load distribution change control.

2. The drive control device according to claim 1,
wherein the axle load distribution change control unit is configured to change the axle load distribution for the first driving axle and the second driving axle as the axle load distribution change control such that an axle load of the second driving axle becomes less than that of the first driving axle, and
wherein the drive control unit is configured to set the driving force of the second electric motor to be less than the driving force of the first electric motor as the driving force change control.

3. The drive control device according to claim 2, wherein the drive control unit is configured to set the driving force of the second electric motor to zero as the driving force change control.

4. The drive control device according to claim 2 or 3, wherein the drive control unit is configured to control torques of the first electric motor and the second electric motor as the driving forces of the first electric motor and the second electric motor.

5. The drive control device according to any one of claims 2 to 4,
wherein the drive control unit is configured to set a first required driving force which is calculated on the basis of an accelerator operation amount to a first command driving force for controlling an operation of the first electric motor and to set a second required driving force which is calculated on the basis of the accelerator operation amount to a second command driving force for controlling an operation of the second electric motor, and
wherein the drive control unit is configured to set a value less than the second required driving force as the second command driving force as the driving force change control.

6. The drive control device according to claim 5, wherein the drive control unit is configured to set a value greater than the first required driving force as the first command driving force as the driving force change control.

7. The drive control device according to claim 5 or 6, further comprising:
a first inverter (15) connected to the first electric motor; and
a second inverter (16) connected to the second electric motor,
wherein the drive control unit is configured to control the operation of the first electric motor by outputting the first command driving force to the first inverter and to control the operation of the second electric motor by outputting the second command driving force to the second inverter.

8. The drive control device according to any one of claims 2 to 7,
wherein the multi-axle-driving electrified vehicle includes a front axle (3), a rear-front axle (4) that is disposed on a rear side with respect to the front axle in a vehicle length direction, and a rear-rear axle (5) that is disposed on a rear side with respect to the rear-front axle in the vehicle length direction,
wherein the first driving axle is the rear-front axle, and
wherein the second driving axle is the rear-rear axle.

9. The drive control device according to any one of claims 1 to 8, wherein the drive control unit is configured to slowly return the driving forces of the first electric motor and the second electric motor which have been changed through the driving force change control to an original state when the axle load distribution change control unit ends the axle load distribution change control.

10. The drive control device according to any one of claims 1 to 9, further comprising:
a first air suspension (8) connected to the first driving axle and a vehicle body of the multi-axle-driving electrified vehicle; and
a second air suspension (9) connected to the second driving axle and the vehicle body,
wherein the axle load distribution change control unit is configured to change the axle load distribution for the first driving axle and the second driving axle by changing amounts of supplied/discharged air of the first air suspension and the second air suspension as the axle load distribution change control.

## Patentansprüche

1. Antriebssteuerungsvorrichtung (1) für ein mehrachsig angetriebenes elektrifiziertes Fahrzeug (2), das eine erste, von einem ersten Elektromotor (6) drehend angetriebene Antriebsachse (4) und eine zweite, von einem zweiten Elektromotor (7) drehend angetriebene Antriebsachse (5) beinhaltet, wobei die Antriebssteuerungsvorrichtung Folgendes umfasst:
eine Achslastverteilungsänderung-Steuerungseinheit (10), die dafür konfiguriert ist, eine Steuerung der Achslastverteilungsänderung zum Ändern einer Achslastverteilung für die erste Antriebsachse und die zweite Antriebsachse durchzuführen, und
eine Antriebssteuerungseinheit (11), die dafür konfiguriert ist, Betätigungen des ersten Elektromotors und des zweiten Elektromotors zu steuern,
wobei die Antriebssteuerungseinheit dafür konfiguriert ist, eine Steuerung der Antriebskraftänderung zum Ändern von Antriebskräften des ersten Elektromotors und des zweiten Elektromotors durchzuführen, wenn die Achslastverteilungsänderung-Steuerungseinheit die Steuerung der Achslastverteilungsänderung durchführt.

2. Antriebssteuerungsvorrichtung nach Anspruch 1,
wobei die Achslastverteilungsänderung-Steuerungseinheit dafür konfiguriert ist, als die Steuerung der Achslastverteilungsänderung die Achslastverteilung für die erste Antriebsachse und die zweite Antriebsachse zu ändern, so dass eine Achslast der zweiten Antriebsachse kleiner wird als die der ersten Antriebsachse, und
wobei die Antriebssteuerungseinheit dafür konfiguriert ist, als die Steuerung der Antriebskraftänderung die Antriebskraft des zweiten Elektromotors so einzustellen, dass sie kleiner als die Antriebskraft des ersten Elektromotors ist.

3. Antriebssteuerungsvorrichtung nach Anspruch 2, wobei die Antriebssteuerungseinheit dafür konfiguriert ist, als die Steuerung der Antriebskraftänderung die Antriebskraft des zweiten Elektromotors auf Null einzustellen.

4. Antriebssteuerungsvorrichtung nach Anspruch 2 oder 3, wobei die Antriebssteuerungseinheit dafür konfiguriert ist, Drehmomente des ersten Elektromotors und des zweiten Elektromotors als die Antriebskräfte des ersten Elektromotors und des zweiten Elektromotors zu steuern.

5. Antriebssteuerungsvorrichtung nach einem der Ansprüche 2 bis 4,
wobei die Antriebssteuerungseinheit dafür konfiguriert ist, eine erste erforderliche Antriebskraft, die auf der Basis eines Umfangs der Gaspedalbetätigung berechnet wird, auf eine erste Befehlsantriebskraft zum Steuern einer Betätigung des ersten Elektromotors einzustellen und eine zweite erforderliche Antriebskraft, die auf der Basis des Umfangs der Gaspedalbetätigung berechnet wird, auf eine zweite Befehlsantriebskraft zum Steuern einer Betätigung des zweiten Elektromotors einzustellen, und
wobei die Antriebssteuerungseinheit dafür konfiguriert ist, als die Steuerung der Antriebskraftänderung einen Wert, der kleiner als die zweite erforderliche Antriebskraft ist, als die zweite Befehlsantriebskraft einzustellen.

6. Antriebssteuerungsvorrichtung nach Anspruch 5, wobei die Antriebssteuerungseinheit dafür konfiguriert ist, als die Steuerung der Antriebskraftänderung einen Wert, der größer als die erste erforderliche Antriebskraft ist, als die erste Befehlsantriebskraft einzustellen.

7. Antriebssteuerungsvorrichtung nach Anspruch 5 oder 6, ferner umfassend:
einen ersten Umrichter (15), der mit dem ersten Elektromotor verbunden ist, und
einen zweiten Umrichter (16), der mit dem zweiten Elektromotor verbunden ist,
wobei die Antriebssteuerungseinheit dafür konfiguriert ist, die Betätigung des ersten Elektromotors durch Ausgeben der ersten Befehlsantriebskraft an den ersten Umrichter zu steuern und die Betätigung des zweiten Elektromotors durch Ausgeben der zweiten Befehlsantriebskraft an den zweiten Umrichter zu steuern.

8. Antriebssteuerungsvorrichtung nach einem der Ansprüche 2 bis 7,
wobei das mehrachsig angetriebene elektrifizierte Fahrzeug eine Vorderachse (3), eine vordere Hinterachse (4), die in einer Fahrzeuglängenrichtung an einer hinteren Seite in Bezug auf die Vorderachse angeordnet ist, und eine hintere Hinterachse (5), die in der Fahrzeuglängenrichtung an einer hinteren Seite in Bezug auf die vordere Hinterachse angeordnet ist, beinhaltet, wobei die erste Antriebsachse die vordere Hinterachse ist und
wobei die zweite Antriebsachse die hintere Hinterachse ist.

9. Antriebssteuerungsvorrichtung nach einem der Ansprüche 1 bis 8, wobei die Antriebssteuerungseinheit dafür konfiguriert ist, die Antriebskräfte des ersten Elektromotors und des zweiten Elektromotors, die durch die Steuerung der Antriebskraftänderung geändert wurden, langsam in einen ursprünglichen Zustand zurückzuführen, wenn die Achslastverteilungsänderung-Steuerungseinheit die Steuerung der Achslastverteilungsänderung beendet.

10. Antriebssteuerungsvorrichtung nach einem der Ansprüche 1 bis 9, ferner umfassend:
eine erste Luftfederung (8), die mit der ersten Antriebsachse und einem Fahrzeugaufbau des mehrachsig angetriebenen elektrifizierten Fahrzeugs verbunden ist, und
eine zweite Luftfederung (9), die mit der zweiten Antriebsachse und dem Fahrzeugaufbau verbunden ist,
wobei die Achslastverteilungsänderung-Steuerungseinheit dafür konfiguriert ist, als die Steuerung der Achslastverteilungsänderung die Achslastverteilung für die erste Antriebsachse und die zweite Antriebsachse durch Ändern von Mengen zugeführter/abgelassener Luft der ersten Luftfederung und der zweiten Luftfederung zu ändern.

## Revendications

1. Dispositif de commande d'entraînement (1) pour un véhicule électrique à essieux moteurs multiples (2) incluant un premier essieu moteur (4) qui est entraîné de façon rotative par un premier moteur électrique (6) et un second essieu moteur (5) qui est entraîné de façon rotative par un second moteur électrique (7), le dispositif de commande d'entraînement comprenant :
une unité de commande de changement de distribution de charge par essieu (10) configuré pour réaliser une commande de changement de distribution de charge par essieu afin de changer une distribution de charge par essieu pour le premier essieu moteur et le second essieu moteur ; et
une unité de commande d'entraînement (11) configurée pour commander des fonctionnements du premier moteur électrique et du second moteur électrique,
dans lequel l'unité de commande d'entraînement est configurée pour réaliser une commande de changement de force motrice afin de changer des forces motrices du premier moteur électrique et du second moteur électrique lorsque l'unité de commande de changement de distribution de charge par essieu réalise la commande de changement de distribution de charge par essieu.

2. Dispositif de commande d'entraînement selon la revendication 1,
dans lequel l'unité de commande de changement de distribution de charge par essieu est configurée pour changer la distribution de charge par essieu pour le premier essieu moteur et le second essieu moteur, en tant que commande de changement de distribution de charge par essieu, de manière telle qu'une charge par essieu du second essieu moteur devienne inférieure à celle du premier essieu moteur, et
dans lequel l'unité de commande d'entraînement est configurée pour régler la force motrice du second moteur électrique pour qu'elle soit inférieure à la force motrice du premier moteur électrique, en tant que commande de changement de force motrice.

3. Dispositif de commande d'entraînement selon la revendication 2, dans lequel l'unité de commande d'entraînement est configurée pour régler la force motrice du second moteur électrique à zéro, en tant que commande de changement de force motrice.

4. Dispositif de commande d'entraînement selon la revendication 2 ou 3, dans lequel l'unité de commande d'entraînement est configurée pour commander des couples du premier moteur électrique et du second moteur électrique, en tant que forces motrices du premier moteur électrique et du second moteur électrique.

5. Dispositif de commande d'entraînement selon l'une quelconque des revendications 2 à 4,
dans lequel l'unité de commande d'entraînement est configurée pour régler une première force motrice nécessaire, qui est calculée sur la base d'une quantité d'actionnement d'accélérateur, à une première force motrice d'instruction afin de commander un fonctionnement du premier moteur électrique et pour régler une seconde force motrice nécessaire, qui est calculée sur la base de la quantité d'actionnement d'accélérateur, à une seconde force motrice d'instruction afin de commander un fonctionnement du second moteur électrique, et
dans lequel l'unité de commande d'entraînement est configurée pour régler une valeur inférieure à la seconde force motrice nécessaire, en tant que seconde force motrice d'instruction, en tant que commande de changement de force motrice.

6. Dispositif de commande d'entraînement selon la revendication 5, dans lequel l'unité de commande d'entraînement est configurée pour régler une valeur supérieure à la première force motrice nécessaire, en tant que première force motrice d'instruction, en tant que commande de changement de force motrice.

7. Dispositif de commande d'entraînement selon la revendication 5 ou 6, comprenant en outre :
un premier onduleur (15) connecté au premier moteur électrique ; et
un second onduleur (16) connecté au second moteur électrique,
dans lequel l'unité de commande d'entraînement est configurée pour commander le fonctionnement du premier moteur électrique en envoyant en sortie la première force motrice d'instruction au premier onduleur et pour commander le fonctionnement du second moteur électrique en envoyant en sortie la seconde force motrice d'instruction au second onduleur.

8. Dispositif de commande d'entraînement selon l'une quelconque des revendications 2 à 7,
dans lequel le véhicule électrique à essieux moteurs multiples inclut un essieu avant (3), un essieu avant-arrière (4) qui est disposé sur un côté arrière par rapport à l'essieu avant dans une direction de longueur de véhicule, et un essieu arrière-arrière (5) qui est disposé sur un côté arrière par rapport à l'essieu avant-arrière dans la direction de longueur de véhicule,
dans lequel le premier essieu moteur est l'essieu avant-arrière, et
dans lequel le second essieu moteur est l'essieu arrière-arrière.

9. Dispositif de commande d'entraînement selon l'une quelconque des revendications 1 à 8, dans lequel l'unité de commande d'entraînement est configurée pour remettre lentement les forces motrices du premier moteur électrique et du second moteur électrique, qui ont été changées par l'intermédiaire de la commande de changement de force motrice, à un état d'origine lorsque l'unité de commande de changement de distribution de charge par essieu termine la commande de changement de distribution de charge par essieu.

10. Dispositif de commande d'entraînement selon l'une quelconque des revendications 1 à 9, comprenant en outre :
une première suspension pneumatique (8) reliée au premier essieu moteur et à une carrosserie de véhicule du véhicule électrique à essieux moteurs multiples ; et
une seconde suspension pneumatique (9) reliée au second essieu moteur et à la carrosserie de véhicule,
dans lequel l'unité de commande de changement de distribution de charge par essieu est configurée pour changer la distribution de charge par essieu pour le premier essieu moteur et le second essieu moteur en changeant des quantités d'air fourni/évacué de la première suspension pneumatique et de la seconde suspension pneumatique, en tant que commande de changement de distribution de charge par essieu.
